# DEMANDE DE BREVET EUROPEEN

(11) **EP 1 690 729 A1**
(43) Date de publication de la demande: **16.08.2006**
(21) Numéro de dépôt: 06300118.4
(22) Date de dépôt: 08.02.2006
(51) Int. Cl.: B60K 28/16, B60T 8/175

(54) **Systeme de controle de la motricite d'un vehicule automobile**

(30) Priorité: 10.02.2005 FR 0501359
(71) Demandeur: PEUGEOT CITROËN AUTOMOBILES S.A., 78140 Velizy Villacoublay (FR)
(72) Inventeur: Gay, François, 27340, CRIQUEBEUF SUR SEINE (FR); Laversanne, Sylvain, 92190, MEUDON (FR)
(74) Mandataire: Fernandez, Francis Lionel

(57) **Abrégé**

Ce système de contrôle de la motricité d'un véhicule automobile, comportant au moins deux roues motrices (1, 2) associées à un différentiel (5) et à un moteur de véhicule (6), du type comportant des moyens d'acquisition de la vitesse de rotation des roues du véhicule (ω1, ω2, ω3 et ω4), et des moyens d'acquisition de l'angle de braquage du volant de direction de celui-ci (θᵥ), est caractérisé en ce qu'il comporte en outre des moyens (7) de surveillance du comportement des roues motrices (1, 2) du véhicule, raccordés aux moyens d'acquisition, pour, en cas de détection d'une perte de motricité d'une première roue motrice, déclencher le fonctionnement de moyens de freinage (9, 10, 11) de celle-ci.

## Description

La présente invention concerne un système de contrôle de la motricité d'un véhicule automobile.

Plus particulièrement, l'invention se rapporte à un tel système de contrôle pour un véhicule comportant au moins deux roues motrices associées à un différentiel et à un moteur de véhicule, du type comportant des moyens d'acquisition de la vitesse de rotation des roues du véhicule, et des moyens d'acquisition de l'angle de braquage du volant de direction de celui-ci.

Sur la plupart des véhicules de tourisme à traction avant, le couple moteur se répartit de façon égale sur les deux roues avant de celui-ci, tout en permettant une différence de vitesse de rotation de ces deux roues. Ces deux roues sont alors associées à un différentiel dit libre.

En cas d'adhérence dissymétrique des roues sur le sol, le véhicule présente alors une faible adhérence d'un côté et une forte adhérence de l'autre côté. Si le conducteur demande de la motricité, le couple moteur se répartit de façon égale sur les deux roues et le côté à haute adhérence répond à cette demande du moteur en générant un effort longitudinal de traction correspondant, tandis que le côté à basse adhérence ne peut pas passer cette demande.

L'effort longitudinal de traction est alors inférieur sur ce côté à celui sur l'autre côté.

Les deux efforts de traction n'étant pas égaux, ceci provoque un couple de lacet qui a tendance à faire tourner le véhicule, du côté à basse adhérence, de façon indépendante de l'angle de braquage du volant.

De plus, le fait que l'effort longitudinal engendré du côté à basse adhérence ne stabilise pas la demande moteur, ceci va provoquer une accélération angulaire de la roue, c'est-à-dire un patinage, d'autant plus forte qu'il y a une différence importante entre l'effort longitudinal généré de ce côté du véhicule et la partie de couple moteur à passer.

Du fait du différentiel, ceci se répercute irrémédiablement sur le régime de rotation du moteur qui peut alors monter jusqu'au rupteur obligeant le conducteur du véhicule à lâcher les gaz, s'il ne l'a pas déjà fait avant.

Ainsi, lorsqu'il y a une différence de potentiel d'adhérence sur les deux roues motrices d'un tel véhicule, que ce soit en raison de l'adhérence effective au sol en ligne droite ou en raison de la différence de lestage des deux roues avant à cause d'un transfert de charge en situation de virage, l'une des deux roues avant motrices, c'est-à-dire celle qui a le moins de potentiel de motricité, sollicitée en couple à hauteur égale à l'autre roue du fait du différentiel libre, va partir en accélération angulaire de rotation, c'est-à-dire en patinage, ce qui va se traduire par une montée en régime du moteur. Ceci oblige alors à lâcher les gaz même si une roue adhère encore. De fait, on peut dire que la roue qui n'a pas de potentiel de motricité empêche la roue qui en a encore au sol de passer les efforts du fait de la liaison cinématique du différentiel.

Dans l'état de la technique, ces problèmes sont résolus par des moyens de réduction du régime de rotation du moteur.

En effet, on utilise aujourd'hui des calculateurs de contrôle moteur qui traitent la perte de potentiel de motricité d'une roue du point de vue global des roues avant du véhicule.

Ainsi, si la moyenne de vitesse de rotation des roues avant dépasse la moyenne de vitesse de rotation des roues arrière plus un seuil déterminé, alors le calculateur de contrôle moteur prend la main sur le conducteur et détermine un couple moteur réduit tel que la moyenne de vitesse des roues avant soit en accord avec la moyenne de vitesse des roues arrière.

La demande de couple moteur est alors régulée pour que la roue qui a le moins de potentiel d'adhérence ne parte pas en accélération, c'est-à-dire en patinage. Ainsi, le couple moteur est réduit et aucune roue ne risque de partir au patinage.

Cependant, ceci se traduit par une perte de motricité globale du véhicule.

Le but de l'invention est donc de résoudre ces problèmes.

A cet effet, l'invention a pour objet un système de contrôle de la motricité d'un véhicule automobile, comportant au moins deux roues motrices associées à un différentiel et à un moteur de véhicule, du type comportant des moyens d'acquisition de la vitesse de rotation des roues du véhicule, et des moyens d'acquisition de l'angle de braquage du volant de direction de celui-ci, caractérisé en ce qu'il comporte en outre des moyens de surveillance du comportement des roues motrices du véhicule, raccordés aux moyens d'acquisition, pour, en cas de détection d'une perte de motricité d'une première roue motrice, déclencher le fonctionnement de moyens de freinage de celle-ci.

Suivant d'autres caractéristiques :
- les moyens de surveillance sont adaptés en outre, en cas de détection d'une perte de motricité de la deuxième roue motrice, pour déclencher le fonctionnement de moyens de réduction du couple délivré par le moteur ;
- les moyens de surveillance comprennent un calculateur de pilotage des moyens de freinage des roues et de contrôle moteur, permettant de contrôler la pression de freinage des roues du véhicule et le couple délivré par le moteur ;
- les moyens de surveillance sont raccordés aux moyens d'acquisition de la vitesse de rotation des roues et de l'angle de braquage du volant pour calculer la pression de freinage et la réduction de couple à appliquer ; et
- le véhicule comporte deux roues avant motrices.

L'invention sera mieux comprise à la lecture de la description qui va suivre, donnée uniquement à titre d'exemple et faite en se référant aux dessins annexés, sur lesquels :
- la Fig.1 illustre le comportement d'un véhicule en virage ;
- la Fig.2 illustre la structure et le fonctionnement d'un système de contrôle selon l'invention ;
- la Fig.3 représente un schéma synoptique illustrant la détermination de la pression de freinage mise en oeuvre dans un système selon l'invention ;
- la Fig.4 représente un schéma synoptique d'un calculateur entrant dans la constitution d'un tel système ; et
- la Fig.5 illustre les résultats obtenus grâce à un système de contrôle selon l'inve ntion.

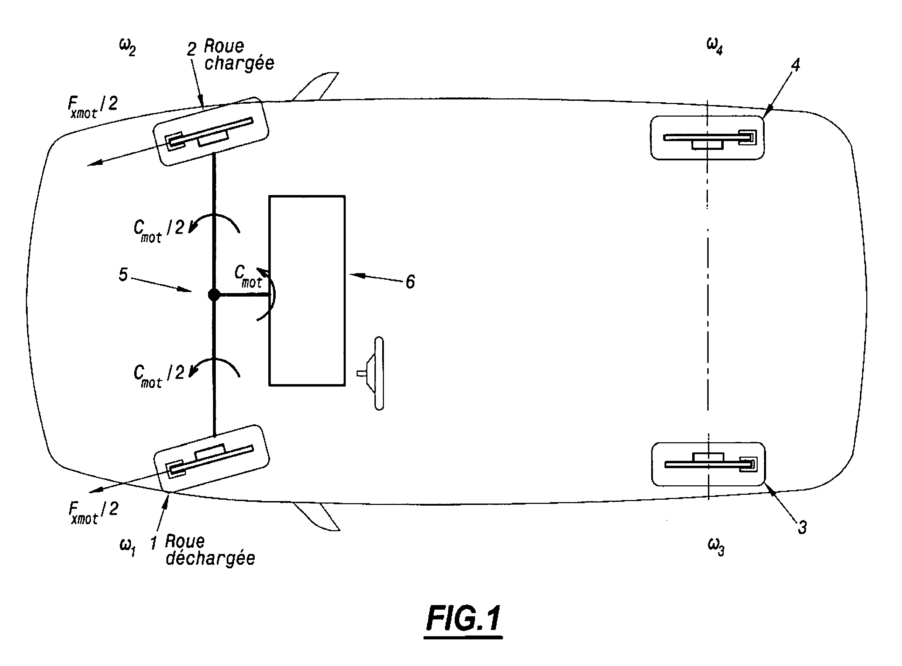

On a en effet illustré sur la figure 1, de façon schématique, un véhicule automobile qui comporte par exemple quatre roues désignées respectivement par les références 1, 2, 3 et 4.

Chacune de ces roues est associée à des moyens d'acquisition de vitesse de rotation, respectivement ω1, ω2, ω3 et ω4, présentant n'importe quelle structure classique.

Dans l'exemple de réalisation, les roues avant du véhicule sont des roues motrices et directrices. Ces roues sont associées par exemple à un différentiel dit libre 5 et à un moteur du véhicule désigné par la référence générale 6, ce moteur délivrant un couple moteur Cₘₒₜ qui est donc réparti sur les roues avant 1 et 2 pour moitié Cₘₒₜ/2, par l'intermédiaire du différentiel 5.

Ceci permet alors à chacune de oes roues de générer un effort de traction longitudinal Fₓₘₒₜ/2 du véhicule.

Cependant, par exemple en virage, comme cela est illustré, l'une des roues, c'est-à-dire la roue intérieure au virage, est déchargée, tandis que l'autre, c'est-à-dire la roue extérieure, est chargée, ce qui se traduit alors par des différences de motricité de ces roues.

Pour résoudre les problèmes évoqués précédemment, le système de contrôle selon l'invention comporte des moyens de surveillance du comportement des roues motrices du véhicule, raccordés à ces moyens d'acquisition, pour, en cas de détection d'une perte de motricité d'une première roue motrice, déclencher le fonctionnement de moyens de freinage de celle-ci.

De plus, les moyens de surveillance sont adaptés en outre, en cas de détection d'une perte de motricité de la deuxième roue motrice, pour déclencher le fonctionnement de moyens de réduction du couple délivré par le moteur.

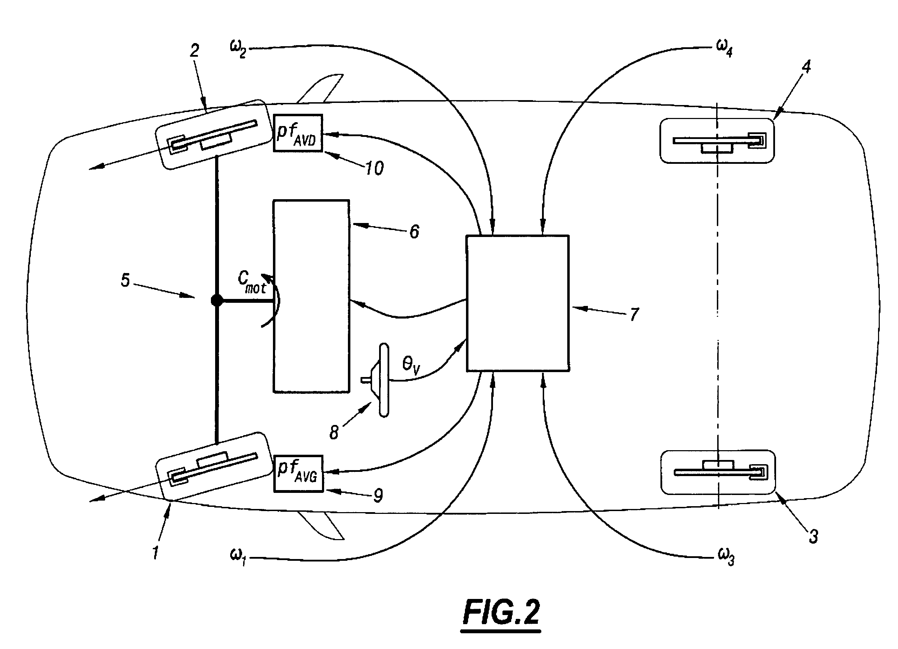

Ceci est alors mis en oeuvre, comme cela est illustré sur la figure 2, par un calculateur de pilotage des moyens de freinage des roues du véhicule et de contrôle moteur, permettant de contrôler la pression de freinage des roues du véhicule et le couple délivré par le moteur.

Ce calculateur est désigné par la référence générale 7 sur cette figure 2 et reçoit donc en entrée des informations issues des capteurs de vitesse de rotation des roues du véhicule, ces vitesses étant désignées par les références ω1, ω2, ω3 et ω4, et d'un capteur d'angle de braquage du volant de direction 8 de ce véhicule, cet angle étant désigné par θᵥ.

La surveillance du comportement des roues du véhicule et en particulier l'analyse de leurs vitesses de rotation respectives, permet alors à ce calculateur 7 de détecter par exemple une perte de motricité d'une première roue motrice du véhicule, telle que par exemple la roue 1 dans l'exemple décrit, pour déclencher le fonctionnement de moyens de freinage de celle-ci, ces moyens de freinage étant désignés par les références générales 9 et 10 respectivement pour les roues avant 1 et 2.

On conçoit alors que dans ce cas, avant toute action sur le couple moteur, on freine la roue qui présente une perte de motricité, ce qui permet de maintenir l'effort longitudinal engendré par l'autre roue et de conserver la motricité globale du véhicule.

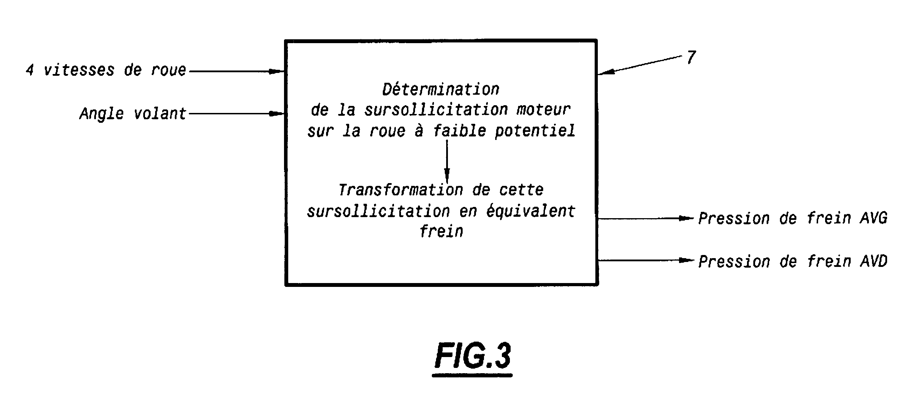

Ceci est par exemple illustré sur la figure 3 où l'on voit que le calculateur 7 est adapté, à partir des quatre vitesses de rotation des roues et de l'angle de braquage du volant de direction, pour déterminer la sursollicitation moteur sur la roue à faible potentiel d'adhérence et pour transformer cette sursollicitation en équivalent de pression de freinage avant gauche ou avant droit.

L'angle volant est nécessaire pour tenir compte de façon complète de la géométrie du véhicule.

Ainsi, la roue chargée qui a le plus de potentiel d'adhérence continue à passer la demande moteur.

Cependant, une action sur le couple moteur peut également s'avérer nécessaire en dernier lieu si la roue extérieure, c'est-à-dire celle présentant la plus forte adhérence ne peut pas non plus passer la demande de couple du moteur.

Dans ce cas, le calculateur est alors adapté, en cas de détection d'une perte de motricité de cette deuxième roue motrice, pour déclencher le fonctionnement de moyens de réduction du couple délivré par le moteur.

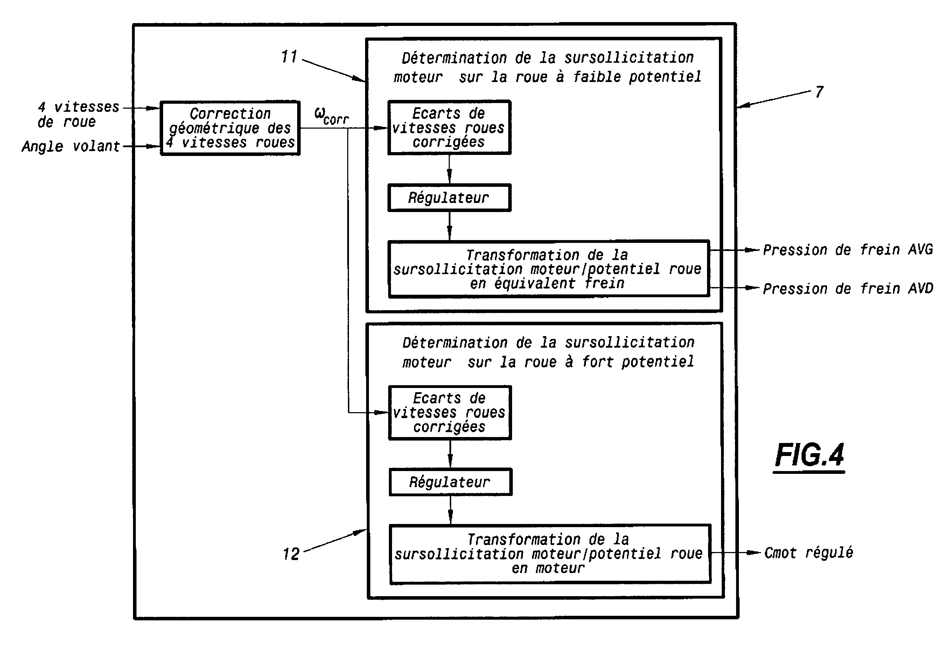

Ceci est par exemple illustré sur la figure 4, où l'on voit que la partie de détermination de la sursollicitation moteur sur la roue à faible adhérence, désignée par la référence générale 11 sur cette figure, telle que décrite en regard de la figure 3, est complétée par une partie 12 de détermination de la sursollicitation moteur sur la roue à fort potentiel d'adhérence, qui, en fonction de l'écart de vitesse de rotation des roues, transforme la sursollicitation moteur sur la roue à fort potentiel en consigne de couple moteur régulé, c'est-à-dire réduit.

Ce calculateur 7 peut alors être relié de façon classique au calculateur électronique du système de freinage du véhicule, permettant de freiner indépendamment les deux roues avant du véhicule, et au calculateur de contrôle moteur de celui-ci, permettant de contrôler le couple moteur.

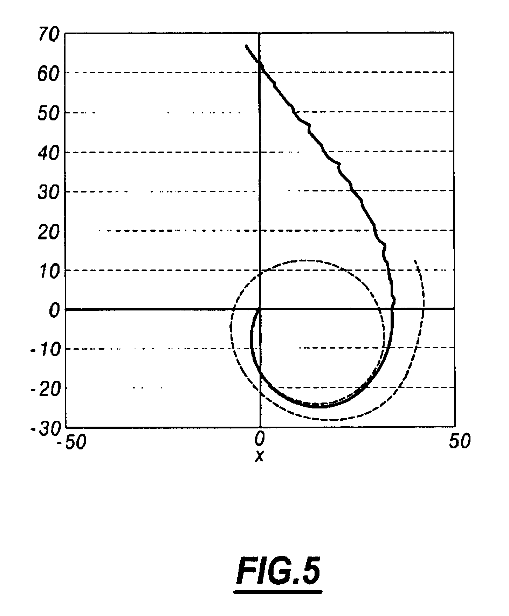

Les résultats d'un tel contrôle sont par exemple illustrés sur la figure 5, où l'on a illustré en trait plein la trajectoire d'un véhicule équipé d'un système de contrôle selon l'état de la technique, et en traits pointillés la trajectoire d'un véhicule équipé d'un système de contrôle selon l'invention.

Dans l'état de la technique, le véhicule est complètement passif et la demande de couple moteur commence à ne plus passer sur la roue intérieure, puis finit par ne plus passer non plus sur la roue extérieure, car celle-ci n'est pas suffisamment chargée, de sorte que le véhicule a tendance à aller tout droit.

Par contre, on constate que dans la trajectoire d'un véhicule équipé d'un système de contrôle selon l'invention, le couple moteur qui n'est pas admissible sur la roue intérieure, est contenu par le frein associé à celle-ci, de sorte que le moteur peut alors pleinement s'exprimer sur la roue extérieure, ce qui fait tourner le véhicule.

De plus, on crée sur la caisse du véhicule un couple de lacet, vers l'intérieur du virage, ce qui s'oppose naturellement à la tendance sous-vireuse d'un véhicule soumis à une accélération en courbe.

Cela confère alors au véhicule une grande capacité à tourner, car la roue extérieure prend de la charge moteur et peut donc passer encore plus de couple moteur, en augmentant le couple de lacet, ce qui a un effet performant en trajectoire.

Bien entendu, d'autres modes de réalisation encore peuvent être envisagés.

## Revendications

1. Système de contrôle de la motricité d'un véhicule automobile, comportant au moins deux roues motrices (1, 2) associées à un différentiel (5) et à un moteur de véhicule (6), du type comportant des moyens d'acquisition de la vitesse de rotation des roues du véhicule (ω1, ω2, ω3 et ω4), et des moyens d'acquisition de l'angle de braquage du volant de direction de celui-ci (θᵥ), **caractérisé en ce qu'**il comporte en outre des moyens (7) de surveillance du comportement des roues motrices (1, 2) du véhicule, raccordés aux moyens d'acquisition, pour, en cas de détection d'une perte de motricité d'une première roue motrice, déclencher le fonctionnement de moyens de freinage (9, 10, 11) de celle-ci.

2. Système selon la revendication 1, **caractérisé en ce que** les moyens de surveillance (7) sont adaptés en outre, en cas de détection d'une perte de motricité de la deuxième roue motrice, pour déclencher le fonctionnement de moyens (12) de réduction du couple délivré par le moteur.

3. Système selon les revendications 1 et 2, **caractérisé en ce que** les moyens de surveillance comprennent un calculateur (7) de pilotage des moyens de freinage (9, 10) des roues (1, 2) et de contrôle moteur (6), permettant de contrôler la pression de freinage des roues du véhicule et le couple délivré par le moteur.

4. Système selon la revendication 3, **caractérisé en ce que** les moyens de surveillance (7) sont raccordés aux moyens d'acquisition de la vitesse de rotation des roues et de l'angle de braquage du volant pour calculer la pression de freinage et la réduction de couple à appliquer.

5. Système selon l'une quelconque des revendications précédentes, **caractérisé en ce que** le véhicule comporte deux roues avant motrices (1, 2).
